# EUROPÄISCHE PATENTSCHRIFT

(11) **EP 3 318 131 B1**
(45) Veröffentlichungstag und Bekanntmachung des Hinweises auf die Patenterteilung: **29.05.2019**
(21) Anmeldenummer: 16197668.3
(22) Anmeldetag: 08.11.2016
(51) Int. Cl.: A22C 15/00

(54) **AUFHÄNGEVORRICHTUNG UND VERFAHREN ZUM ABNEHMEN EINER WURSTGRUPPE**
SUSPENSION DEVICE AND METHOD FOR REMOVING A SAUSAGE GROUP
DISPOSITIF DE SUSPENSION ET PROCÉDÉ DE DÉTACHEMENT D'UN ENSEMBLE DE SAUCISSES

(43) Veröffentlichungstag der Anmeldung: 09.05.2018
(73) Patentinhaber: Albert Handtmann Maschinenfabrik GmbH & Co. KG, 88400 Biberach (DE)
(72) Erfinder: Bächtle, Manfred, 88433 Schemmerhofen (DE); Osswald, Florian, 89079 Ulm (DE); Reutter, Siegfried, 88436 Eberhardzell (DE); Müller, Gerhard, 88433 Schemmerhofen (DE); Schliesser, Gerhard, 88489 Wain (DE); Merk, Jochen, 88416 Ochsenhausen (DE)
(74) Vertreter: Grünecker Patent- und Rechtsanwälte PartG mbB

(56) Entgegenhaltungen:
- EP-A1- 1 985 183
- EP-A1- 2 689 665
- EP-A1- 2 692 236
- DE-U1- 9 014 610
- US-A1- 2003 096 568

## Beschreibung

Die Erfindung betrifft eine Aufhängevorrichtung zum Aufhängen von Würsten gemäß dem Oberbegriff des Anspruchs 1 sowie ein Verfahren zum Abnehmen einer Wurstgruppe.

Eine solche Aufhängevorrichtung ist beispielsweise bereits aus der EP1985183A1 bekannt. Dieses Dokument zeigt bereits eine Aufhängevorrichtung mit einer separaten zusätzlich zur Aufhängevorrichtung vorgesehenen Rauchstockzuführung zum lagegenauen Zuführen eines Rauchstocks. Am vorderen Ende des Rauchstocks befindet sich eine Führungsspitze, die ein einfaches und schonendes Einfädeln in eine Schleife ermöglicht. Die Führungsspitze hat keinerlei Halte- oder Führungsfunktion, sondern dient lediglich als Einfädelhilfe.

Aus den Dokumenten EP2689665A1 und DE9014610U1 ist bereits eine Führung am Haken bekannt, um einen Rauchstock zu führen.

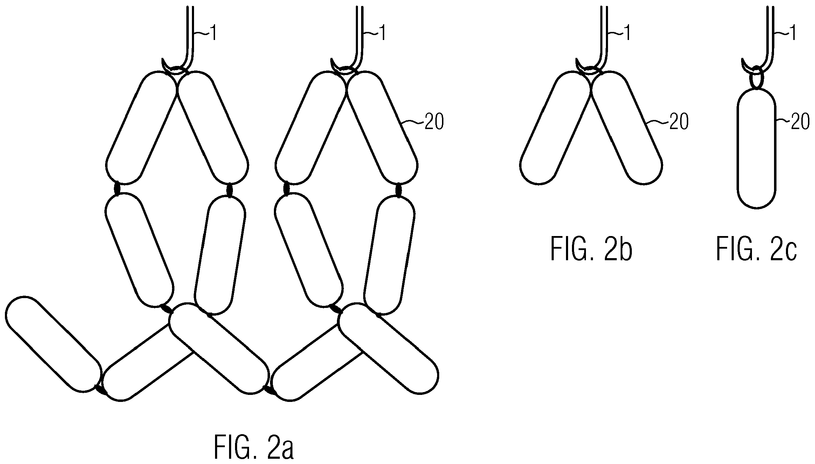

Bei der Herstellung von Würsten bzw. Wurstprodukten durch Füll- und Portioniersysteme werden Wursthüllen, z.B. Natur-, Kunst- oder Kollagendärme mittels einer Füllmaschine, insbesondere Vakuumfüllmaschine, mit pastöser Masse gefüllt. Durch das Abdrehen des gefüllten Darms ergibt sich in der Abdrehlinie eine Wurstkette aus zusammenhängenden Einzelwürsten bzw. Portionen. Bei der Übergabe der Wurstkette auf eine Aufhängevorrichtung werden vorgegebene Abteilstellen von Haken erfasst, so dass sich auf der Aufhängevorrichtung aus der Wurstkette mehrere Wurstschleifen bilden (siehe z.B. Fig. 2a). Eine solche Schleife besteht aus mehreren Würsten (3-Loop, 4-Loop, in Fig. 2a 6-Loop). Es ist auch möglich, die Würste paarweise in entsprechenden Schleifen aufzuhängen (Fig. 2b) oder Einzelwürste beispielsweise an einer Schleife auf einem Haken aufzuhängen (Fig. 2c).

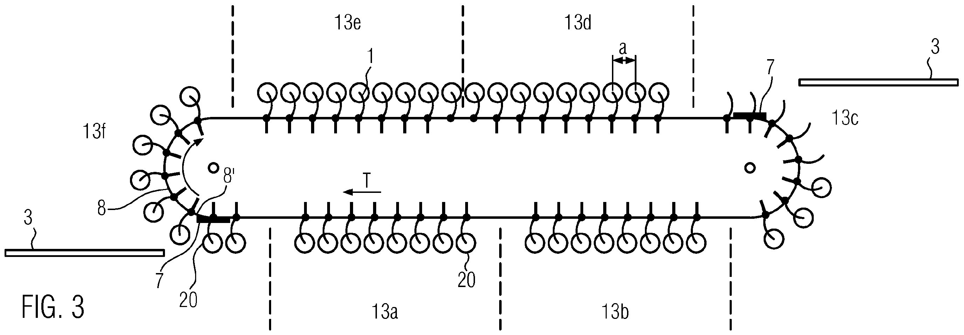

Dabei können mehrere Haken mit jeweiligen Würsten in sogenannten Wurstgruppen zusammengefasst werden, wie beispielsweise aus Fig. 3 hervorgeht. Bei der Wurstentnahme aus der Aufhängevorrichtung wird ein Rauchstock in die Wurstschleifen einer Gruppe eingeführt (eingefädelt) und anschließend der mit den Wurstschleifen behängte Rauchstock aus den Haken für die weitere Verarbeitung entnommen. Die gängigen geometrischen Ausführungen eines Rauchstocks sind rund, V-förmig oder sternförmig, ohne größere Fasen oder Spitzen an den Enden. Die Länge liegt in einem Bereich von etwa 1000 mm bis 1500 mm. Für den Bediener ist es schwierig, den langen Rauchstock mit seinem freien Ende korrekt in die Wurstschlaufen einzufädeln. Somit benötigt der Bediener viel Zeit zum Einfädeln des Rauchstocks, wobei nicht ausgeschlossen werden kann, dass Produkte beschädigt werden. Ein Einfädeln mit einer Hand ist kaum möglich. Aufgrund der Länge des Rauchstocks ist es auch schwierig den Rauchstock im Wesentlichen horizontal in die Aufhängevorrichtung einzuführen, da der Rauchstock an seinem dem Bediener abgewandten Ende nicht gehalten ist.

Je größer die Spreizung der Würste am Haken, desto einfacher ist es, den Rauchstock einzuführen. Je praller ein Naturdarm gefüllt wird, desto mehr Spreizung ergibt sich durch die Kranzigkeit der Naturdärme. Jedoch werden nicht ausschließlich pralle Produkte produziert und insbesondere bei Kunst- und Kollagendärmen ist keine Kranzigkeit vorhanden, so dass sich das Einfädeln in die Wurstschleifen als äußerst schwierig gestaltet.

Es wurde bereits versucht, die Geometrie der Hakenspitzen so anzupassen, dass sich eine möglichst große Spreizung der Wurstschleifen durch das Anlegen der linken und rechten Portion an der Hakenspitze ergibt. Je breiter die Hakenspitze, umso größer ist auch die Spreizung. Je größer die Spreizung, desto schwieriger wird jedoch wiederum die Produktentnahme aus den Haken, da der Abstand zwischen den Hakenspitzen gering ist. Ein größerer Hakenabstand könnte hier Abhilfe schaffen, allerdings wirkt sich dieser negativ auf die Behängungsdichte des Rauchstocks und damit die Auslastung der nachfolgenden Anlagen aus.

Weiter wurde versucht, dass durch eine ungerade Anzahl an Portionen pro Schleife, z.B. 5-Loop, sich die mittlere Portion der Schleife nahezu in horizontaler Ausrichtung befindet. Somit ergibt sich automatisch eine größere Spreizung zwischen den restlichen Portionen. Ein entsprechendes Verfahren ist jedoch bei gerader Anzahl von Portionen pro Schleife nicht möglich. Auch das paarweise Aufhängen ist nicht möglich.

Hiervon ausgehend liegt der vorliegenden Erfindung die Aufgabe zugrunde, eine Aufhängevorrichtung und ein Verfahren bereitzustellen, die das Einführen des Rauchstocks in die Aufhängevorrichtung vereinfachen.

Erfindungsgemäß wird diese Aufgabe durch die Merkmale der Ansprüche 1, 5 und 9 gelöst.

Gemäß der vorliegenden Erfindung ist eine Aufhängevorrichtung zum Aufhängen von Würsten, insbesondere Wurstketten bereitgestellt mit mehreren umlaufenden Aufhängehaken. Die Aufhängehaken weisen eine Führungseinrichtung auf zum Führen eines Rauchstockaufsatzes entgegen der Bewegungsrichtung T der Aufhängehaken. Das bedeutet, dass ein Rauchstockaufsatz, der auf das vordere Ende des Rauchstocks aufgesetzt werden kann, durch die Führungseinrichtung mit den Aufhängehaken verbunden sind, d.h., dass der Rauchstockaufsatz nur mit einem Führungsabschnitt einer Rauchstockaufsatzführungseinrichtung in die Führungseinrichtung der Aufhängehaken eingefädelt werden müssen und so exakt in der richtigen Position in die Wurstgruppe hinein bewegt werden können. Das bedeutet, dass trotz der Länge des Rauchstocks der Rauchstock an nur einem Ende gefasst werden kann und sicher entgegen der Bewegungsrichtung der Aufhängehaken in die Schleifen bewegt werden kann. Die Führungseinrichtung trägt dabei auch einen Teil des Gewichts des Rauchstocks, so dass auch dies zu einer wesentlichen Entlastung des Bedienpersonals führt. Der Rauchstockaufsatz kann beispielsweise bereits in die Führungseinrichtungen der einzelnen Aufhängehaken eingeführt sein, wobei der Bediener dann nur den Rauchstock in das hintere Ende der Aufhängehaken (in Transportrichtung T betrachtet) einsetzen muss, wobei die Führungseinrichtung den Rauchstock trägt. Der Bediener muss dann nur noch mit einer Hand den Rauchstock halten und kann diesen in die Wurstgruppe einführen. Die Wurstschleifen können dann ohne Einfluss einer größeren Spreizung entnommen werden. Die Erfindung ermöglicht das sichere Einführen eines Rauchstocks in eine Wurstgruppe bzw. Wurstschleife unabhängig von der Spreizung, d.h. unabhängig von der Prallheit der gefüllten Würste, der Darmart, der Rauchstockgeometrie des Kalibers und unabhängig von der Geschicklichkeit eines Bedieners.

Die vorliegende Erfindung ermöglicht außerdem eine verbesserte Rauchstockauslastung und ein Einfädeln in einem sehr kurzen Zeitraum. Die Erfindung kann weiter verhindern, dass Produkte durch den Rauchstock beschädigt werden. Insgesamt führt die vorliegende Erfindung zu einer deutlichen Leistungssteigerung und zu einer erhöhten Produktionssicherheit. Vorteilhafterweise sind die Führungseinrichtungen der Haken derart ausgebildet, dass der Rauchstock oder der Rauchstockaufsatz axial beweglich in den Führungseinrichtungen gelagert ist. Somit kann der Rauchstock exakt in den Wurstschleifen unter den Haken geführt werden. Dabei können die Aufhängehaken vorzugsweise als Führungseinrichtung eine Nut, d.h. eine Aussparung, umfassen, in der ein Führungsabschnitt, z.B. in Form eines Vorsprungs des Rauchstocks oder des Rauchstockaufsatzes läuft. Es ist aber auch möglich, das die Aufhängehaken als Führungseinrichtungen einen Vorsprung umfassen, der in einer Nut bzw. Aussparung im Rauchstock oder Rauchstockaufsatz läuft. Wesentlich ist nur, dass Rauchstock bzw. Rauchstockaufsatz und Aufhängehaken relativ zueinander in Axialrichtung bewegbar sind.

Dabei ist es besonders vorteilhaft, dass der Rauchstockaufsatz durch die Führungseinrichtung auch getragen, d.h. entgegen der Schwerkraft gehalten werden. Dies kann beispielsweise durch Magnetkraft erfolgen, d.h., dass zumindest die Führungseinrichtung der Aufhängehaken und/oder die Führungseinrichtung, d.h. der Führungsabschnitt des Rauchstockaufsatzes magnetisch ausgebildet sind. Der Rauchstockaufsatz kann jedoch auch durch die Kontur der Führungseinrichtung gehalten werden, die insbesondere sich seitlich, d.h. mit einer horizontalen Richtungskomponente, zur Führungsrichtung erstreckende Bereiche ausweist, die den Rauchstoffaufsatz gegen die Schwerkraft tragen. Die Führungskontur weist dabei zum Beispiel einen Querschnitt auf, der im oberen Bereich breiter alsin einem unteren Bereich ist und z.B. im Wesentlichen T-förmig oder schlüssellochförmig ist.Der Rauchstockaufsatz kann jedoch auch durch ein Druckstück oder ein Federelement in einer Aussparung der Führungseinrichtung gehalten werden. Unabhängig von der tatsächlichen Ausführungsform ist es lediglich wesentlich, dass die Führungseinrichtung der Haken und des Rauchstocksaufsatzes den Rauchstockaufsatz führt und auch entgegen der Schwerkraft hält.

Wenn der Rauchstockaufsatz in die Führungseinrichtungen der Haken eingeführt ist, so kann er in der Aufhängevorrichtung verbleiben und von dem Rauchstock beim Einfädeln des Rauchstocks dicht hinter ein Ende einer Wurstgruppe geschoben werden, wonach der beladene Rauchstock entnommen werden kann. Der Rauchstockaufsatz verbleibt in der Aufhängevorrichtung und läuft dann zusammen mit den Haken in Bewegungsrichtung der Haken in Richtung Umlenkradius der Aufhängevorrichtung. Um eine Zerstörung des Rauchstockaufsatzes zu verhindern, ist daher vor dem Umlenkradius ein Anschlag vorgesehen, der den Rauchstockaufsatz stoppt. Da eine Relativbewegung von Rauchstockaufsatz und Aufhängehaken durch die Führungseinrichtungen möglich ist, verbleibt der Rauchstockaufsatz in dieser Position, während die Aufhängehaken weiterlaufen können. Der Rauchstockaufsatz kann dann von einem nächsten Rauchstock entgegen der Bewegungsrichtung der Aufhängehaken verschoben werden. Es ist möglich, dass ein entsprechender Anschlag auf beiden Längsseiten der Aufhängevorrichtung vorgesehen ist, wenn Wurstgruppen an beiden Seiten entnommen werden sollen.

Gemäß einem nicht erfindungsgemäßen Ausführungsbeispiel kann entweder der Rauchstock selbst in der Führungseinrichtung der Haken geführt werden, was bereits zu einer wesentlichen Erleichterung führt. Der Rauchstock kann dann, wenn er in die Wurstgruppe eingeführt wurde, aus der Führung entnommen werden, wenn z.B. der Rauchstock entgegen der Haltekraft, z.B. eines Magneten, aus der Führung weg bewegt wird. Ganz besonders vorteilhaft ist jedoch ein Rauchstockaufsatz vorgesehen. Der Rauchstockaufsatz weist eine Verbindungseinrichtung, insbesondere Aussparung auf zum axialen Einschieben und Herausziehen des Rauchstocks. Der Rauchstockaufsatz weist dabei eine Führungseinrichtung bzw. Führungsabschnitt auf, die mit der Führungseinrichtung der Aufhängehaken zusammenwirkt, damit der Rauchstockaufsatz entgegen der Bewegungsrichtung der Aufnahmehaken bewegt werden kann. Der Rauchstock kann somit auf einfache Art und Weise in die Verbindungseinrichtung des Rauchstockaufsatzes axial eingeschoben werden und wird dadurch von dem Rauchstockaufsatz und der Führungseinrichtung von den Haken getragen. Der Rauchstock kann auch auf einfache Art und Weise wieder aus der Verbindungseinrichtung, beispielsweise zur Entnahme des Rauchstocks, herausgezogen werden. Somit bildet der Rauchstockaufsatz eine einseitige Rauchstocklagerung.

Die Führungseinrichtung des Rauchstockaufsatzes kann entweder einen Vorsprung umfassen, der in einer Nut der Aufhänghaken laufen kann oder eine Nut in der ein Vorsprung der Haken laufen kann. Eine entsprechende Ausgestaltung kann besonders einfach und kostengünstig realisiert werden.

Vorzugsweise umfasst der Rauchstockaufsatz an seinem der Aussparung gegenüberliegenden Ende eine Spitze, wobei die Spitze vorzugsweise eine exzentrische Spitze ist und insbesondere die Position der Spitze relativ zur Mittelachse des Rauchstockaufsatzes einstellbar ist. Durch die Spitze kann der Rauchstockaufsatz einfach in die Wurstschleifen eingeführt werden. Dadurch, dass die Position der Spitze veränderbar ist, kann die Spitze exakt zur Schleifenmitte ausgerichtet werden.

Die Verbindungseinrichtung des Rauchstockaufsatzes umfasst einen Anschlag, an den der Rauchstock beim Ein-bzw. Aufschieben anschlägt, derart, dass der Rauchstockaufsatz durch den Rauchstock bewegt werden kann.

Vorzugsweise ist der Durchmesser der Aussparung größer als der Durchmesser des Rauchstocks, so dass auf einfache Art und Weise der Rauchstock zur Entnahme zurück, d.h. in Bewegungsrichtung T der Aufhänghaken bewegt werden kann, um dann aus der Aufhängevorrichtung heraus bewegt zu werden. Wenn die Verbindungseinrichtung, insbesondere Aussparung als Halbschale ausgebildet ist, d.h. z.B. an ihrem oberen und/oder seitlichen Bereich eine Öffnung aufweist, kann der Rauchstock aus dem Rauchstockaufsatz seitlich und/oder nach oben herausbewegt werden, ohne dass er wieder zurück in Bewegungsrichtung der Aufhängehaken aus der Aussparung herausbewegt werden muss.

Der Rauchstockaufsatz kann in der Aufhängevorrichtung verbleiben, d.h. an dem Haken hängend, wenn mehrere Wurstgruppen nacheinander entnommen werden. Dies bringt den Vorteil mit sich, dass es sich nicht um ein Loseteil handelt, das verloren gehen kann und dass nicht für jede abzunehmende Wurstgruppe ein Rauchstock oder ein entsprechender Rauchstockaufsatz neu in die Führungseinrichtungen der Aufhängehaken eingefädelt werden muss. Im Gegensatz dazu muss lediglich ein neuer Rauchstock an den Rauchstockaufsatz angedockt bzw. eingefädelt werden.

Die Erfindung betrifft auch ein Verfahren zum Abnehmen einer Wurstgruppe, die an mehreren Aufhängehaken einer Aufhängevorrichtung hängt mit folgenden Schritten:
- Einführen eines Rauchstocks in eine Wurstgruppe, insbesondere in eine Wurstschleife,
- Bewegen des Rauchstocks entgegen der Bewegungsrichtung der Aufnahmehaken bis ans Ende der Wurstgruppe, wobei ein Rauchstockaufsatz, der mit dem Rauchstock an seinem vorderen Ende verbunden ist , in einer Führungseinrichtung der Aufnahmehaken geführt wird und
- Entnehmen des mit Würsten beladenen Rauchstocks.

Das erfindungsgemäße Verfahren ermöglicht, wie zuvor erläutert, ein besonders einfaches und effizientes Entnehmen von Wurstgruppen. Unter Wurstschleifen versteht man hierbei, wie zuvor beschrieben, in Schleifen auf Haken aufgehängte Wurstketten oder aber Einzelwürste an einer Schleife, wobei die Schleifen auch nach unten offen sein können. Unter dem Ausdruck "bis ans Ende" versteht man, dass der Rauchstock zumindest über den letzten Haken der abzunehmenden Wurstgruppe hinaus bewegt wird.

Es ist ganz besonders vorteilhaft, wenn der Rauchstockaufsatz bereits in den Führungseinrichtungen der Aufnahmehaken eingeführt ist und dann der Rauchstock in die Verbindungseinrichtung des Rauchstockaufsatzes eingeführt wird und der Rauchstockaufsatz entgegen der Bewegungsrichtung der Aufnahmehaken bis über das Ende der aufzunehmenden Wurstgruppe geschoben wird und dann der mit Würsten beladene Rauchstock entnommen wird. Somit muss der Rauchstockaufsatz nicht extra in die Führungen eingefädelt werden. Der Rauchstock muss nur in die Verbindungseinrichtungen, zum Beispiel Aussparung des Rauchstockaufsatzes eingeschoben werden, was sehr einfach und schnell zu bewerkstelligen ist. Rauchstock und Rauchstockaufsatz fahren dann gemeinsam entgegen der Bewegungsrichtung der Aufnahmehaken bis zum Wurstgruppenende.

Gemäß einem Ausführungsbeispiel wird vor der Entnahme des mit Würsten beladenen Rauchstocks der Rauchstock in Bewegungsrichtung der Aufnahmehaken von dem Rauchstockaufsatz weg, d.h. aus der Aussparung heraus bewegt. Dann ist der Rauchstock frei und kann aus der Vorrichtung entnommen werden. Alternativ oder zusätzlich kann der Rauchstock auch aus einer Öffnung im seitlichen oder oberen Bereich der Verbindungseinrichtung herausbewegt werden.

Der Rauchstockaufsatz kann sich nach Entnahme des Rauchstocks in Bewegungsrichtung der Aufhängehaken mit den Aufhängehaken bis zu einem Anschlag vor einem Umlenkradius mit bewegen, wobei dort ein neuer Rauchstock in den Rauchstockaufsatz eingeschoben werden kann, der zusammen mit dem Rauchstockaufsatz dann erneut entgegen der Bewegungsrichtung der Aufnahmehaken bewegt wird, um eine nachfolgende Wurstgruppe abzunehmen.

Somit ist es möglich, dass der einmal eingeführte Rauchstockaufsatz in der Aufhängevorrichtung verbleibt, wenn mehrere Wurstgruppen nacheinander entnommen werden.

Es ist ganz besonders vorteilhaft, wenn an der Vorder- und Rückseite der Aufhängevorrichtung Wurstgruppen abgenommen werden, wobei dann an der Vorder- und Rückseite der Aufhängevorrichtung ein jeweiliger Rauchstock an einem Rauchstockaufsatz geführt wird oder der Rauchstock selbst in den Hakenführungen geführt wird.

Vorteilhafterweise ist der Rauchstockaufsatz flexibel ausgebildet, insbesondere aus einem elastischen Material, derart dass der Umlauf des Rauchstockaufsatzes um die Hakenumlenkungmöglich ist. Zumindest ist jedoch seine Spitze flexibel ausgebildet. Somit kann der Rauchstock einfach eingeführt werden und es kann verhindert werden, dass bei Kollision Würste verletzt werden. Es ist aber auch möglich, dass der Rauchstockaufsatz mehrere Kettensegmente umfasst, die in Axialrichtung beweglich miteinander verbunden sind. Das heißt, dass die einzelnen Kettensegmente um eine Achse, die im Wesentlichen senkrecht zur Förderrichtung der Aufhängehaken läuft, beweglich sind. So ist ebenfalls der Umlauf des Rauchstockaufsatzes um die Hakenumlenkung möglich.

Die vorliegende Erfindung wird nachfolgend unter Bezugnahme der folgenden Figuren näher erläutert.
- Fig. 1: zeigt grob schematisch eine Seitenansicht einer Aufhängevorrichtung gemäß der vorliegenden Erfindung.
- Fig. 2a: zeigt eine in Schleifen aufgehängte Wurstkette.
- Fig. 2b: zeigt Würste, die paarweise an einer Abteilstelle an dem Haken aufgenommen sind.
- Fig. 2c: zeigt schematisch eine Wurstportion an einer Schleife an einem Haken.
- Fig. 3: zeigt eine Aufsicht auf eine Aufhängevorrichtung gemäß der vorliegenden Erfindung.
- Fig. 4a: zeigt perspektivisch einen Rauchstockaufsatz gemäß der vorliegenden Erfindung.
- Fig. 4b: zeigt den Rauchstockaufsatz, der in Figur 4a gezeigt ist, von hinten betrachtet.
- Fig. 5a: zeigt eine perspektivische Ansicht eines im Aufhängehaken gehaltenen und geführten Rauchstockaufsatzes von vorne gemäß der vorliegenden Erfindung.
- Fig. 5b: zeigt den in Fig. 5a gezeigten Rauchstockaufsatz von hinten.
- Fig. 6: zeigt in perspektivischer Darstellung einen Rauchstockaufsatz, der in die Aufhängehaken eingeführt wird gemäß der vorliegenden Erfindung
- Fig. 7a-c: zeigen das Einschieben eines Rauchstocks zusammen mit einem Rauchstockaufsatz gemäß der vorliegenden Erfindung.
- Fig. 8a: zeigt eine perspektivische Darstellung eines Rauchstockaufsatzes an einem Aufhängehaken mit einer Halbschale gemäß der vorliegenden Erfindung.
- Fig. 8b: zeigt eine Ansicht des in Fig. 8a gezeigten Ausführungsbeispiels von hinten.
- Fig. 9a: zeigt in perspektivischer Darstellung einen Rauchstockaufsatz gemäß einem weiteren Ausführungsbeispiel der vorliegenden Erfindung.
- Fig. 9b: zeigt das in Fig. 9a gezeigte Ausführungsbeispiel von hinten.
- Fig. 10a: zeigt eine weitere Ausführungsform eines Rauchstockaufsatzes mit mehreren Kettensegmenten gemäß der vorliegenden Erfindung.
- Fig. 10b: zeigt eine Aufsicht des in Fig. 10a gezeigten Ausführungsbeispiels.
- Fig. 11a: zeigt eine weitere Ausführungsform eines Rauchstockaufsatzes gemäß der vorliegenden Erfindung.
- Fig. 11b: zeigt eine Aufsicht auf das in Fig. 11a gezeigte Ausführungsbeispiel.
- Fig. 12a: zeigt ein weiteres Ausführungsbeispiel gemäß der vorliegenden Erfindung, bei der der Rauchstock selbst in der Führungseinrichtung der Aufnahmehaken geführt ist.
- Fig. 12b: zeigt eine Seitenansicht des in Fig. 12a gezeigten Ausführungsbeispiels.
- Fig. 12c: zeigt einen Schnitt entlang der Linie A-A der Fig. 12b.
- Fig. 13a: zeigt ein weiteres Ausführungsbeispiel, bei dem der Rauchstock selbst in der Führungseinrichtung des Aufnahmehakens geführt wird, in perspektivischer Darstellung.
- Fig. 13b: zeigt einen Querschnitt durch den in Figur 13 a gezeigten Rauchstock und Aufnahmehaken gemäß der vorliegenden Erfindung.
- Fig. 14: zeigt in Perspektivischer Darstellung eine weitere Ausführungsform einer möglichen Verbindungseinrichtung eines Rauchstockaufsatzes gemäß der vorliegenden Erfindung.

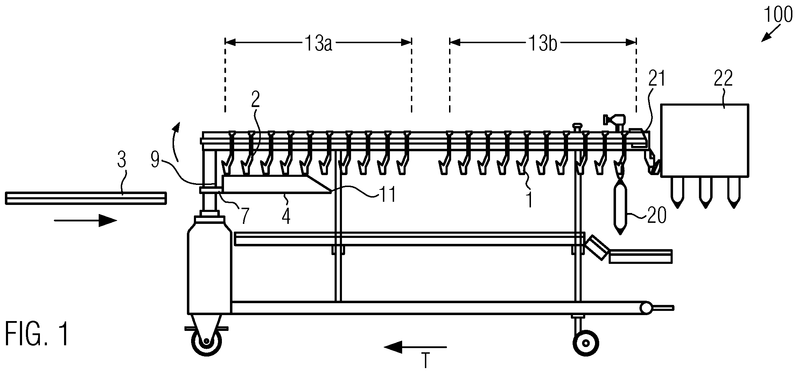

Fig. 1 zeigt eine Aufhängevorrichtung 100 gemäß der vorliegenden Erfindung. Wie aus Fig. 1 hervorgeht, umfasst die Aufhängevorrichtung mehrere auf einer geschlossenen Umlaufbahn umlaufende Aufhängehaken 1. Die Aufhängehaken sind vorzugsweise parallel zueinander angeordnet und die Umlaufbahn läuft hier z.B. im Wesentlichen horizontal. Die Aufhängehaken 1 dienen dazu, Würste bzw. Wurstschleifen im Bereich einer Übergabeposition 21 aufzunehmen und in Transportrichtung T, d.h. in Umlaufrichtung der Aufhängehaken 1, in einen oder mehrere Abnahmebereiche zu transportieren. Der Abnahmebereich ist der Bereich, in dem die Aufhängehaken 1 zur Abnahme der Würste durch einen Rauchstock 3 angeordnet sind. Die Würste hängen dabei z.B. in Wurstschleifen über den Haken. Dabei kann unter Wurstschleife entweder eine Schleife, die an einer Wurst 20 oder an mehreren Würsten von einem Schlaufenleger angebracht wurde, verstanden werden (Fig. 2c) oder aber Schlaufen, die durch in Schleifenform vorliegende Wurstketten gebildet sind (Einzelwürste in Reihe, verbunden zueinander an Abdrehstellen) (siehe hierzu beispielsweise Fig. 2a). Unter Schleife wird in dieser Anmeldung auch verstanden, wenn mindestens zwei Würste 20 an ihrer Abteil- bzw. Abdrehstelle auf dem Aufhängehaken 1 aufgenommen sind.

Im vorderen Bereich der Aufhängevorrichtung 100 fädelt ein Aufhängehaken 1 an der Übergabeposition 21 in die Abteilstelle zwischen zwei Portionen einer Wurstschleife ein, die von einer Transporteinrichtung 22 von einer Füllmaschine kommend antransportiert wird, nimmt diese auf und transportiert sie in Transportrichtung T weiter. Die Aufhängehaken 1 sind hier an einem umlaufenden Antriebselement, beispielsweise in Form eines Antriebriemens oder einer Antriebskette angeordnet, die jeweils von einem Motor angetrieben werden können. Dabei können verschiedene Wurstgruppen 13a,b,c,d,e aus einer vorbestimmten Anzahl von Haken mit einem Rauchstock 3 aus der Aufnahmevorrichtung 100 entnommen werden.

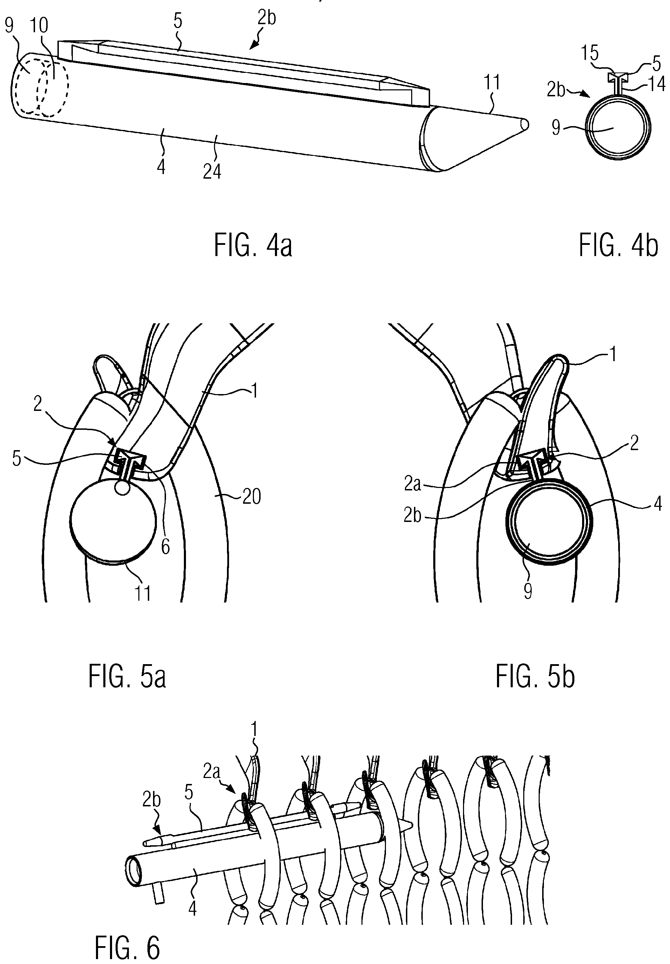

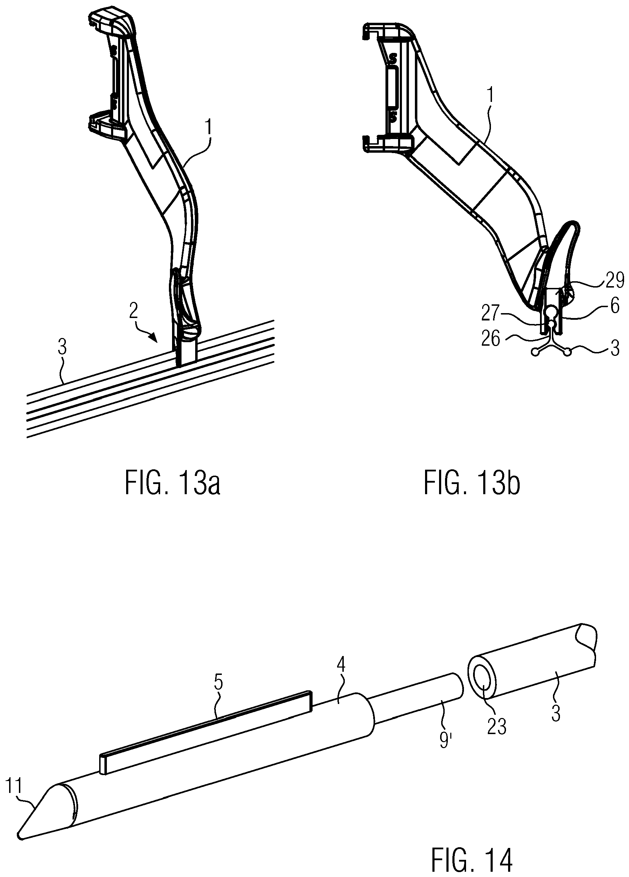

Gemäß einer ersten Ausführungsform umfasst die Aufhängevorrichtung Aufhängehaken 1, die eine Führungseinrichtung 2a aufweisen zum Führen eines Rauchstocks 3 oder eines Rauchstockaufsatzes 4 entgegen der Bewegungsrichtung T der Aufhängehaken 1. Gemäß einem ersten Ausführungsbeispiel umfasst die Vorrichtung einen Rauchstockaufsatz 4, der ebenfalls eine Führungseinrichtung 2b,5,6 aufweist und der insbesondere in Zusammenhang mit Fig. 4 näher erläutert wird, wobei die Führungseinrichtungen 2a, b zusammen eine Führung 2 bilden. Der Rauchstockaufsatz 4 weist einen Grundkörper 24 auf, der an seinem hinteren Ende eine Aussparung 9 aufweist, die einen Durchmesser hat, der größer ist als der Durchmesser oder Durchmesser des Umkreises des Rauchstocks, derart, dass ein Rauchstock 3 einfach in die Aussparung 9 eingeschoben werden kann und in der Aussparung 9 gelagert werden kann. Als Verbindungseinrichtung kann alternativ jedoch, wie in Fig. 14 dargestellt ist, der Rauchstockaufsatz 4 auch einen Vorsprung 9' aufweisen, wobei eine Öffnung 23 im Rauchstock 3 oder ein Ansatzteil am Rauchstock auf den Vorsprung 9' aufgeschoben werden kann, derart, dass der Rauchstock mit dem Rauchstockaufsatz 4 verbunden ist und durch einfaches Wegbewegen von dem Rauchstockaufsatz 4 wieder entkoppelt werden kann, genauso wie dies auch bei dem Ausführungsbeispiel in Fig. 4a der Fall ist. Der Rauchstockaufsatz 4 umfasst ferner eine Spitze 11, hier eine exzentrische Spitze, die konisch zuläuft. Durch einen Drehmechanismus kann die Position der Spitze relativ zur Mitte der Wurstschleifen eingestellt werden. Hierzu kann die Spitze als separates Teil gefertigt sein, das in den Grundkörper 24 drehbar und fixierbar eingesteckt sein kann. Die Spitze kann aus flexiblem Material gefertigt sein, das sich während des Betriebs an die Schleifenöffnung anpasst, derart dass die Würste, die gegebenenfalls von der Spitze getroffen werden, unverletzt bleiben. An seinem oberen Bereich weist der Grundkörper 24 ebenfalls eine Führungseinrichtung 2b, hier in Form eines sich länglich erstreckenden Vorsprungs 5, auf. Der sich nach oben erstreckende Vorsprung läuft nach vorne und hinten spitz zu und kann somit einfach in die Führungseinrichtungen 2a der Haken einfädeln.

Fig. 4b zeigt eine Ansicht des Rauchstockaufsatzes 4 von hinten. Hier kann die Aussparung 9 und die Führungseinrichtung 2b noch besser erkannt werden. Die Führungseinrichtung 2b umfasst hier den im Querschnitt T-förmig ausgebildeten Vorsprung 5. Der schienenartige Vorsprung kann in der Führungseinrichtung 2a, die in dem jeweiligen Haken 1 als Aussparung 6 ausgebildet ist, laufen. Die Aussparung 6 weist hier eine zum Vorsprung 5 komplementäre Kontur auf. Die Führungskontur 5 kann somit in die Führungsnut 6 der Haken, wie insbesondere aus Fig. 6 hervorgeht, eingefädelt werden, derart, dass der Rauchstockaufsatz 4 in Axialrichtung durch die Führungseinrichtung 2 geführt und durch die Form der Führungskontur 5 getragen wird. Da der Vorsprung 5 bzw. die Führungskontur 5 sich seitlich zur Führungsrichtung erstreckende Führungsbereiche aufweist, wird der Rauchstockaufsatz 4 sicher in der Nut getragen. Dabei ist die Führungskontur 5 bzw. der Vorsprung 5 axial in der Führungsnut 6 beweglich. Ist der Rauchstockaufsatz 4 einmal in die Aufnahmevorrichtung 100 eingeführt, so kann er in dieser Vorrichtung verbleiben. Während des Einführens des Rauchstockaufsatzes 4, wie in Fig. 6 gezeigt ist, kann ein Anschlag 7, der nachfolgend noch näher erläutert wird, deaktiviert, z.B. weggeklappt werden. Der Rauchstockaufsatz kann auch auf der dem Anschlag gegenüberliegenden Seite in Transportrichtung in die Führung der Haken eingeführt werden.

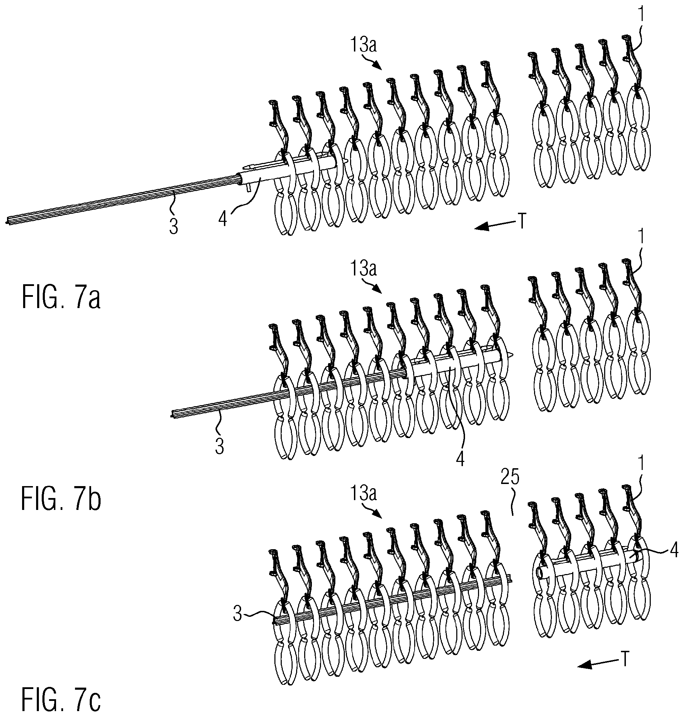

Wie in Fig. 7a,b und c gezeigt ist, kann dann ein Rauchstock 3 über die Verbindungseinrichtung, hier die Aussparung 9, mit dem Rauchstockaufsatz 4 verbunden werden, wobei dann der Rauchstock zusammen mit dem Rauchstockaufsatz 4 entgegen der Bewegungsrichtung T der Haken 1 durch die Schleifen geführt werden kann (Fig. 7b), wobei der Rauchstock 3 so weit geführt wird, dass er über das Ende 25 einer Wurstgruppe 13a mit einer vorbestimmten Anzahl von Aufnahmehaken 1 ragt. Der Rauchstock 3 kann dann mit Würsten beladen aus der Aufhängevorrichtung 100 entnommen werden, wie nachfolgend noch näher beschrieben wird.

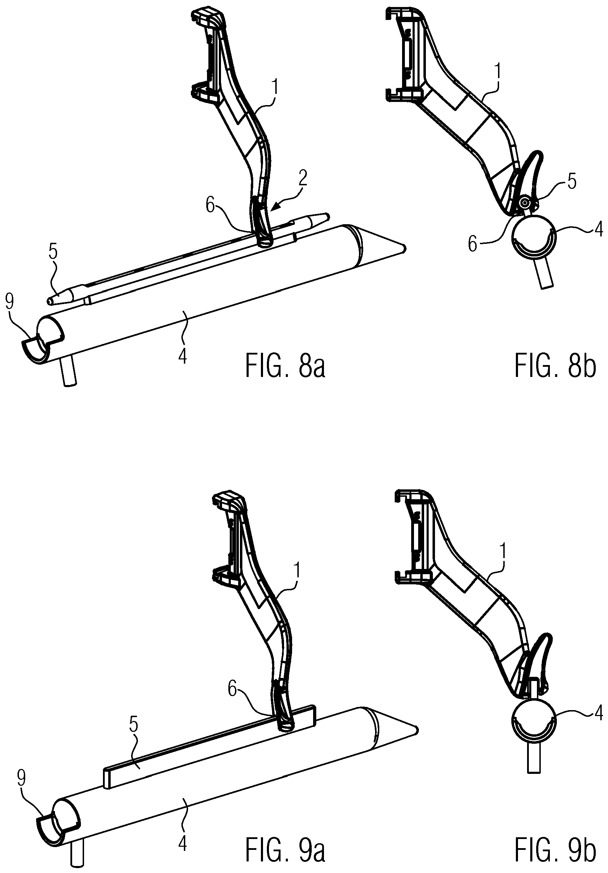

Fig. 8a,b zeigen eine besondere Ausführungsform gemäß der vorliegenden Erfindung. Die Führungseinrichtung 2b weist hier einen zylindrischen Vorsprung 5 auf bzw. eine im Querschnitt zylindrische Führungskontur, die in einer entsprechend komplementären Nut aufgenommen ist. Der Vorteil der zylindrischen Führung ist, dass sich der Rauchstockaufsatz 4 durch sein Eigengewicht vertikal ausrichten kann und somit selbständig zur Schleifenmitte einstellt. Die Aussparung 9 ist hier als Teilschale ausgebildet, hier z.B. als Halbschale, und ist nach oben und zur Seite geöffnet. Somit kann der Rauchstock 3 aus der Aussparung 9 entnommen werden, indem er einfach nach oben abgehoben wird und muss nicht entgegen der Transportrichtung der Aufhängehaken 1 bewegt und herausgezogen werden.

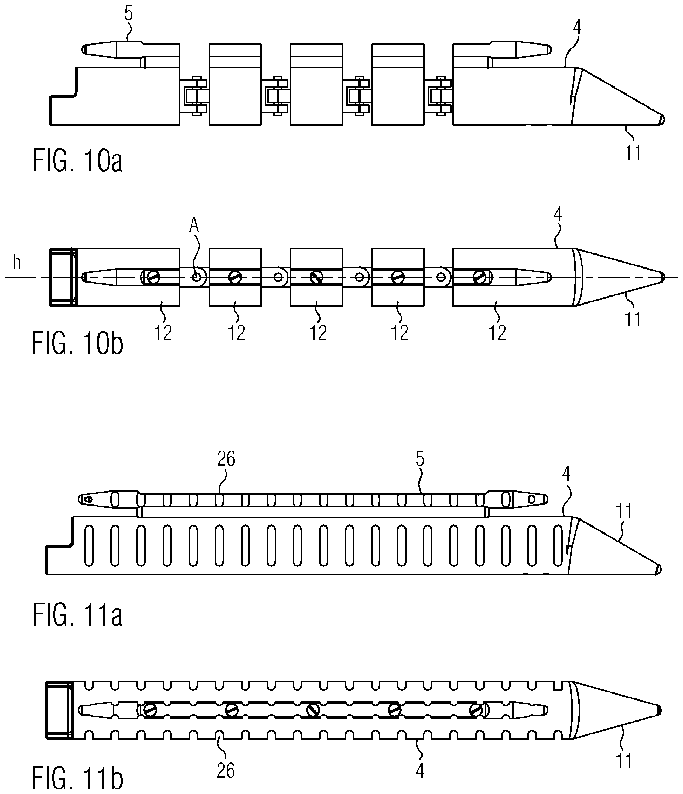

Fig. 9a, 9b zeigen eine weitere mögliche Ausführungsform eines Rauchstockaufsatzes, wobei hier die Führungseinrichtung 2b einen sich länglich erstreckenden Vorsprung 5 aufweist, der z.B. einen im Wesentlichen rechteckigen Querschnitt aufweist. Die Führungsnut hat eine entsprechend komplementäre Form. Eine entsprechende Nut dient ausschließlich der Führung. Gehalten kann der Rauchstockaufsatz 4 beispielsweise durch Magnetkraft, indem beispielsweise der Haken zumindest im Bereich der Führungseinrichtungen 2a oder aber die Führungseinrichtungen 2b magnetisch ausgebildet sind. Wie zuvor beschrieben, kann der Rauchstockaufsatz 4 zumindest an seiner Spitze 11 aus flexiblem Material, z.B. aus einem Elastomer gebildet sein. Es ist aber auch möglich, dass der Rauchstockaufsatz 4 aus mehreren Kettensegmenten 12 gebildet ist, die in Axialrichtung miteinander beweglich verbunden sind und zueinander um eine Achse A senkrecht zur Mittelachse M beweglich miteinander verbunden sind, wie insbesondere aus den Figuren 10a, b hervorgeht. Durch diese flexible Gestaltung des Rauchstockaufsatzes ist es möglich, dass dieser um den Umlenkradius 8 der Hakenführungsbahn geführt werden kann.

Fig. 11a und 11b zeigen ein weiteres Ausführungsbeispiel gemäß der vorliegenden Erfindung, das im Wesentlichen dem Rauchstockaufsatz, wie er in Fig. 8a,b gezeigt ist, entspricht. Dieser Rauchstockaufsatz weist mehrere Kerben 26 im seitlichen Bereich und auch im Bereich der Führungskontur bzw. des Vorsprungs 5 auf. Die Aussparungen 26 dienen dazu, den Rauchstockaufsatz ähnlich dem Ausführungsbeispiel gemäß Fig. 10a, b flexibel zu gestalten, jedoch in einer hygienisch günstigeren Ausführung. Bei Verwendung eines flexiblen Rauchstockaufsatzes kann auf den Anschlag 7 verzichtet werden.

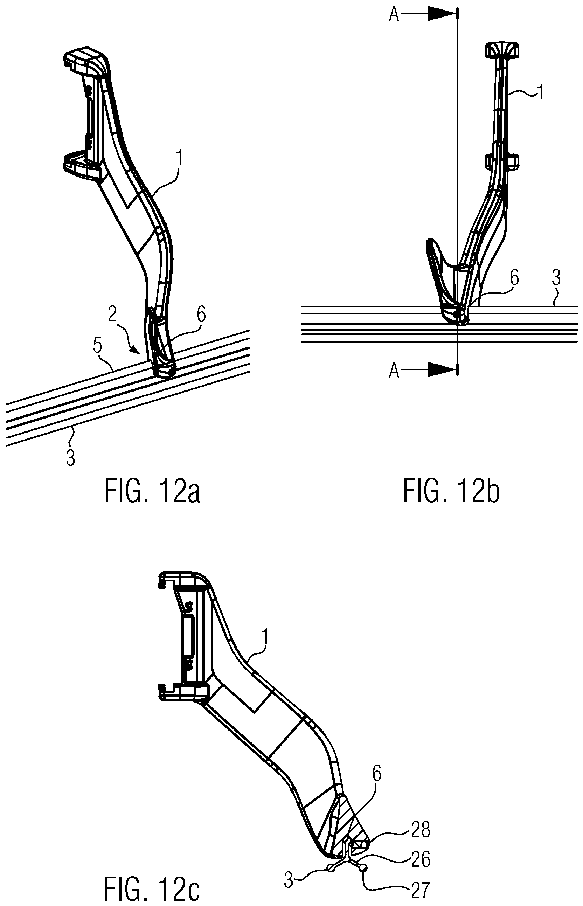

Fig. 12 und 13 zeigen ein weiteres Ausführungsbeispiel gemäß der vorliegenden Erfindung. Hier weisen die Haken, ebenso wie bei den vorherigen Ausführungsbeispielen, Führungseinrichtungen 2a,5,6, hier z.B. in Form von Nuten auf, mit der Ausnahme, dass hier nicht ein Rauchstockaufsatz 4 in der Führungseinrichtung 2a der Aufhängehaken 1 geführt wird, sondern der Rauchstock bzw. eine Führungseinrichtung 2b des Rauchstocks selbst. Bei dem in Fig. 12a,b,c gezeigten Ausführungsbeispiel weist der Rauchstock einen sternförmigen Querschnitt auf, wobei die äußeren Endbereiche der sich nach außen erstreckenden Arme 26 eine abgerundete Verbreiterung 27 aufweisen. Die Führungsnut ist nach unten offen und z.B. breiter als die abgerundete Verbreiterung 27 des Rauchstocks.

Wie insbesondere aus den Fig. 12a-12c hervorgeht, wird der Arm 26 mit der Verbreiterung 27 in einer Nut im Aufhängehaken 1 eingeschoben. Damit der Rauchstock auch in der Führung gehalten wird, kann z.B. eine Feder 28 vorgesehen sein, die den Arm und/oder die Verbreiterung 27 zumindest teilweise umschließt, um der Gewichtskraft des Rauchstocks entgegenzuwirken. Zum Lösen des Rauchstocks aus der Führung kann dieser nach Überwinden der Federkraft einfach nach unten abgezogen werden. Alternativ kann der Rauchstock auch mit Magnetkraft gehalten werden, indem mindestens der Abschnitt, der die Führungsnut 6 aufweist, magnetisch ausgebildet ist.

Ein weiteres Ausführungsbeispiel zum Führen des Rauchstocks 3 ist in Fig. 13a+b gezeigt, bei dem der Arm 26 mit der Verbreiterung 27 in ein Druckstück 29 mit einer entsprechenden Führungsnut 6 eingesetzt ist. Die Kontur der Aussparung 6 ist an die Kontur des Führungsabschnittes des Rauchstocks angepasst. Das Druckstück 29 ist flexibel ausgebildet, wobei der Rauchstock in dem Druckstück 29 befestigt ist, sodass der Rauchstock nicht nach unten herausfallen kann. Zum Entnehmen des Rauchstocks wird der Rauchstock einfach nach unten aus dem flexiblen Druckstück 29 abgezogen. Auch ohne die Verwendung eines Rauchstockaufsatzes kann der Rauchstock gemäß den in Figur 12-13 gezeigten Ausführungsbeispielen in den ersten Haken einer Hakengruppe eingefädelt werden und dann axial entgegen de Bewegungsrichtung T verschoben werden, wobei dann der Rauchstock automatisch in die Nuten 6 der nachfolgenden Haken 1 eingeführt wird. Somit ergeben sich die gleichen Vorteile wie bei der Ausführungsform, bei der der Rauchstockaufsatz in der Führungseinrichtung 2a der Aufhängehaken 1 läuft.

Nachfolgend wird das erfindungsgemäße Verfahren unter Bezugnahme der Figuren 1, 6 und 7 näher erläutert.

Zunächst wird, wie in Fig. 6 gezeigt ist, der Rauchstockaufsatz 4 mit seiner Führungseinrichtung 2b in die Führungseinrichtung 2a der Aufhänghaken 1 entgegen der Transportrichtung T eingeführt, wobei hier der längliche Führungsvorsprung 5 in die entsprechend ausgebildeten Nuten 6 der Aufhängehaken 1 eingeführt wird. Dies kann entweder dann erfolgen, wenn sich bereits Würste auf den Haken 1 befinden oder aber vor der Produktion. Das Einsetzen bzw. die Entnahme des Rauchstockaufsatzes 4 ist nur im Bereich des Umlenkradius 8, d.h. da wo der Umlenkradius beginnt, möglich, wie in Fig. 3 durch das Bezugszeichen 8' angedeutet ist. Beim Einführen des Rauchstockaufsatzes 4 kann der Anschlag 7 deaktiviert sein oder der Rauchstockaufsatz wird am Beginn des Umlenkradius 8 eingeführt, wo die Haken sich aufgrund der Kreisbewegung aufspreizen, oder an der dem Anschlag gegenüberliegenden Stelle.

Jetzt kann zur Aufnahme einer Wurstgruppe der Rauchstock 3 mit seinem vorderen Ende an dem hinteren Ende des Rauchstockaufsatzes 4 angedockt werden, d.h. vorzugsweise in die Aussparung 9 zum Beispiel bis zu einem Anschlag 10 (siehe Figur 4a) eingeführt werden, wie in Figur 7a gezeigt ist. Dadurch wird der Rauchstock bereits einseitig an seinem dem Bediener abgewandten Ende in dem Rauchstockaufsatz 4 gelagert und gehalten. Bewegt nun der Bediener den Rauchstock 3 entgegen Transportrichtung T, wie aus Fig. 7a+b hervorgeht, so bewegen sich der Rauchstock 3 und der Rauchstockaufsatz 4 zusammen in Axialrichtung durch die Wurstschleifen. Der Rauchstock 3 wird so lange bewegt, bis sein vorderes Ende, d.h. das vom Bediener abgewandte Ende, außerhalb eines Endes 25 der Wurstgruppe 13a liegt. Dabei liegt der Rauchstockaufsatz 4 bereits im Bereich der nächsten Wurstgruppe. Die Gruppen können beispielsweise voneinander beabstandet sein, wobei zwischen den Wurstgruppen ein oder mehrere Haken entfernt wurden. Dann kann das Ende der Wurstgruppe von dem Bediener gut erkannt werden. Alternativ ist es auch möglich eine optische Anzeigeeinrichtung zu verwenden, die das Ende einer Wurstgruppe anzeigt.

Zur Entnahme des Rauchstocks 3 kann nun beispielsweise der Rauchstock 3 in Transportrichtung T zurückbewegt werden, derart, dass er von dem Rauchstockaufsatz 4 entkoppelt wird. Daraufhin kann der Bediener den Rauchstock zur Seite und/oder nach oben abheben, derart, dass der mit Würsten beladene Rauchstock aus der Aufhängevorrichtung 100 entnommen werden kann.

Der Rauchstockaufsatz 4 bewegt sich anschließend zusammen mit den Aufhängehaken 1, die sich in Transportrichtung T bewegen, mit, bis der Rauchstockaufsatz 4 an einem Anschlag 7 (Fig. 1, Fig. 3) anschlägt und in dieser Endposition, die vor dem Umlenkradius 8 liegt, verweilt. Dann kann zur Abnahme der nächsten Gruppe 13b der nächste Rauchstock 3 an den Rauchstockaufsatz 4 zur Entnahme der nächsten Wurstgruppe angedockt werden.

Zur Entnahme des Rauchstocks wurde vorab beschrieben, dass der Rauchstock 3, wie aus Fig. 7c hervorgeht, in Transportrichtung T aus der Aussparung heraus zurück bewegt wird. Alternativ ist es auch möglich, wie zuvor beschrieben, die Aussparung 9 z.B. als Halbschale oder Teilschale auszubilden, derart, dass ohne axiale Relativbewegung zwischen Rauchstock und Rauchstockaufsatz 4 der Rauchstock zur Seite und/oder nach oben aus der Aussparung 9 entnommen werden kann.

Wie in Fig. 3 gezeigt ist, ist es auch möglich, dass die Wurstgruppen 13 durch einen Rauchstock 3 von zwei gegenüberliegenden Seiten entnommen werden. Dann ist es vorteilhaft, wenn beispielsweise sowohl auf der Vorderseite als auch auf der Rückseite jeweils ein entsprechender Rauchstockaufsatz 4 vorgesehen ist. Die Entnahme von zwei gegenüberliegenden Seiten ist auch mit dem Ausführungsbeispiel gemäß Fig. 13 möglich.

Es ist auch möglich, den zuvor genannten Prozess zu automatisieren, indem der Rauchstock 3 über einen sogenannten mechanischen Rauchstockeinschub in die Wurstschleifen bzw. zusammen mit dem Rauchstockaufsatz 4 in die Wurstschleifen eingefahren wird und dann beispielsweise von einem Roboter entnommen werden kann.

## Patentansprüche

1. Aufhängevorrichtung (100) zum Aufhängen von Würsten (20), insbesondere Wurstketten, mit mehreren umlaufenden Aufhängehaken (1) und einem Rauchstockaufsatz (4) mit einer Verbindungseinrichtung (9), insbesondere einer Aussparung (9), zum axialen Ein- oder Aufschieben eines Rauchstocks
**dadurch gekennzeichnet, dass**
die Aufhängehaken (1) eine Führungseinrichtung (2a,5,6) aufweisen, zum Führen des Rauchstockaufsatzes (4) entgegen der Bewegungsrichtung (T) der Aufhängehaken (1), wobei der Rauchstockaufsatz (4) eine Führungseinrichtung (2b, 5, 6) aufweist, die mit der Führungseinrichtung (2a, 5, 6) der Aufhängehaken (1) zusammenwirkt.

2. Aufhängevorrichtung (100) nach Anspruch 1, **dadurch gekennzeichnet, dass** die Führungseinrichtungen (2a, ,5,6) derart ausgebildet sind, dass der Rauchstock (3) oder der Rauchstockaufsatz (4) axial beweglich in den Führungseinrichtungen (2a) gelagert ist, wobei vorzugsweise
die Aufhängehaken (1) als Führungseinrichtungen (2a) eine Nut (6) umfassen, in der ein Vorsprung (5) des Rauchstocks oder des Rauchstockaufsatzes (4) läuft oder die Aufhängehaken (1) als Führungseinrichtungen (2a) einen Vorsprung (5) umfassen, der in einer Nut (6) im Rauchstock oder Rauchstockaufsatz (4) läuft.

3. Aufhängevorrichtung (100) nach mindestens einem der Ansprüche 1-2, **dadurch gekennzeichnet, dass** der Rauchstock (3) oder der Rauchstockaufsatz (4) durch die Führungseinrichtung (2a, 5, 6) gehalten wird, insbesondere durch Magnetkraft, oder durch die Kontur der Führungseinrichtung (2a,5,6) oder durch ein Druckstück oder ein Federelement.

4. Aufhängevorrichtung (100) nach mindestens einem der vorhergehenden Ansprüche, **dadurch gekennzeichnet, dass** die Aufhängevorrichtung (100) mindestens einen Anschlag (7) aufweist, der den Rauchstockaufsatz (4) vor Beginn eines Umlenkradius (8) stoppt.

5. Rauchstockaufsatz (4) mit einer Verbindungseinrichtung (9), insbesondere einer Aussparung (9) zum axialen Ein- oder Aufschieben eines Rauchstocks (3) und mit einer Führungseinrichtung (2b,5,6) zum Führen des Rauchstockaufsatzes (4) entgegen der Bewegungsrichtung von Aufnahmehaken (1) einer Aufhängevorrichtung (100), insbesondere nach mindestens einem der Ansprüche 1-4, wobei die Führungseinrichtung (2b, 5, 6) des Rauchstockaufsatzes mit einer Führungseinrichtung (2a, 5, 6) der Aufhängehaken zusammenwirken kann.

6. Rauchstockaufsatz (4) nach mindestens Anspruch 5, **dadurch gekennzeichnet, dass** die Führungseinrichtung (2b,5,6) entweder einen Vorsprung (5) umfasst, der in einer Nut (6) der Aufhängehaken (1) laufen kann oder eine Nut (6) in der ein Vorsprung (5) der Haken laufen kann.

7. Rauchstockaufsatz (4) nach Anspruch 5 oder 6, **dadurch gekennzeichnet, dass** der Rauchstock (3) an seinem der Verbindungseinrichtung (9) gegenüberliegenden Ende eine Spitze (11) aufweist, wobei die Spitze (11) vorzugsweise eine exzentrisch angeordnete Spitze ist und insbesondere die Position der Spitze (11) relativ zur Mittelachse (M) des Rauchstockaufsatzes (4) einstellbar ist.

8. Rauchstockaufsatz (4) nach mindestens einem der Ansprüche 5 bis 7, **dadurch gekennzeichnet, dass** die Verbindungseinrichtung, insbesondere die Aussparung (9) einen Rauchstockanschlag (10) umfasst, an den der Rauchstock (3) beim Einschieben anschlägt, wobei vorzugsweise der Durchmesser der Aussparung (9) größer ist als der Durchmesser oder Durchmesser des Umkreises des Rauchstocks und/oder die Verbindungseinrichtung (9) als Teilschale, insbesondere Halbschale, ausgebildet ist.

9. Verfahren zum Abnehmen einer Wurstgruppe, die an mehreren Aufnahmehaken (1) einer Aufhängevorrichtung (100) hängt, insbesondere einer Aufhängevorrichtung nach mindestens einem der Ansprüche 1-4 mit folgenden Schritten:
- Einführen eines Rauchstocks (3) in Wurstschleifen einer Wurstgruppe (13),
- Bewegen des Rauchstocks (3) entgegen der Bewegungsrichtung (T) der Aufnahmehaken (1) bis ans Ende der Wurstgruppe, wobei ein Rauchstockaufsatz (4), der mit dem Rauchstock an seinem vorderen Ende verbunden ist in einer Führungseinrichtung (2a,5,6) der Aufnahmehaken (1) geführt wird und
- Entnehmen des mit Würsten beladenen Rauchstocks (3) aus der Aufhängevorrichtung (100).

10. Verfahren nach Anspruch 9, **dadurch gekennzeichnet, dass**
- ein Rauchstockaufsatz (4) in Führungseinrichtungen der Aufnahmehaken (1) eingeführt ist,
- der Rauchstock (3) in die Verbindungseinrichtung (9) des Rauchstockaufsatzes eingeführt wird und der Rauchstock (3) den Rauchstockaufsatz (4) entgegen der Bewegungsrichtung (T) der Aufnahmehaken (1) bis über das Ende der aufzunehmenden Wurstgruppe schiebt und dann
- der mit Würsten beladene Rauchstock (3) entnommen wird.

11. Verfahren nach Anspruch 10, **dadurch gekennzeichnet, dass**
vor der Entnahme des mit Würsten beladenen Rauchstocks, der Rauchstock (3) in Bewegungsrichtung der Aufnahmehaken (1) von dem Rauchstockaufsatz (4) weg bewegt wird oder aus einer Öffnung im seitlichen und/oder oberen Bereich der Verbindungseinrichtung (9) heraus bewegt wird.

12. Verfahren nach Anspruch 9,10 oder 11 **dadurch gekennzeichnet, dass**
der Rauchstockaufsatz (4) sich nach Entnahme des Rauchstocks (3) in Bewegungsrichtung der Aufhängehaken (1) mit den Aufhängehaken (1) bis zu einem Anschlag (7) vor einem Umlenkradius (8) mit bewegt und dort ein neuer Rauchstock (3) in den Rauchstockaufsatz (4) eingeschoben wird, der zusammen mit dem Rauchstock (3) entgegen der Bewegungsrichtung (T) der Aufnahmehaken (1) bewegt wird, um eine nachfolgende Wurstgruppe abzunehmen.

13. Verfahren nach mindestens einem der Ansprüche 9-11, **dadurch gekennzeichnet, dass** der einmal eingeführte Rauchstockaufsatz (4) in der Aufhängevorrichtung (1) verbleibt, wenn mehrere Wurstgruppen (13) nacheinander entnommen werden.

14. Verfahren nach mindestens einem der Ansprüche 9-13, **dadurch gekennzeichnet, dass** an der Vorder und Rückseite der Aufhängevorrichtung (100) Wurstgruppen abgenommen werden und an Vorder- und Rückseite der Aufhängevorrichtung (100) ein jeweiliger Rauchstock an einem Rauchstockaufsatz (4a, 4b) oder in der Führung des Aufhängehakens geführt wird.

15. Rauchstockaufsatz nach mindestens einem der Ansprüche 5-8, **dadurch gekennzeichnet, dass** zumindest die Spitze des Rauchstockaufsatzes (4) flexibel ausgebildet ist, vorzugsweise aus einem elastischen Material oder mehreren Kettensegmenten (12), die in Axialrichtung beweglich miteinander verbunden sind.

## Claims

1. Hanging device (100) for hanging sausages (20), in particular sausage chains, with multiple circulating hanging hooks (1) and a smoke bar top module (4) with a connecting device (9), in particular a recess (9) for axially inserting or sliding of a smoke bar
**characterized in that**
the hanging hooks (1) have a guiding device (2a,5,6) for guiding the smoke bar top module (4) against the movement direction (T) of the hanging hooks (1), wherein the smoke bar top module (4) has a guiding device (2b,5,6) which interacts with the guiding device (2a,5,6) of the hanging hooks.

2. Hanging device (100) according to Claim 1, **characterized in that** the guiding devices (2a, 5,6) are formed in such a way that the smoke bar (3) or the smoke bar top module (4) is mounted in the guiding devices (2a) in a way that it can be moved axially, wherein preferably
the hanging hooks (1) as guiding devices (2a) comprise a groove (6) in which a protrusion (5) of the smoke bar or of the smoke bar top module (4) runs or wherein the hanging hooks (1) as guiding devices (2a) comprise a protrusion (5) that runs in a groove (6) in the smoke bar or smoke bar top module (4).

3. Hanging device (100) according to at least one of the Claims 1-2, **characterized in that** the smoke bar (3) or the smoke bar top module (4) is held by the guiding device (2a, 5, 6), in particular by means of magnetic force, or by the contour of the guiding device (2a,5,6) or by a pressure piece or a spring element.

4. Hanging device (100) according to at least one of the preceding claims, **characterized in that** the hanging device (100) has at least one end stop (7) that stops the smoke bar top module (4) prior to the start of a deflection radius (8).

5. Smoke bar top module (4) with a connecting device (9), in particular a recess (9) for axial inserting or sliding of a smoke bar (3) and with a guiding device (2b,5,6) for guiding of the smoke bar top module (4) against the movement direction of input hooks (1) of a hanging device (100), in particular according to at least one of the Claims 1-4, wherein the guiding device (2b,5,6) of the smoke bar top module can interact with a guiding device (2a,5,6) of the hanging hooks..

6. Smoke bar top module (4) according to at least Claim 5, **characterized in that** the guiding device (2b,5,6) comprises either a protrusion (5) that can run in a groove (6) of the hanging hooks (1) or a groove (6) in which a protrusion (5) of the hooks can run.

7. Smoke bar top module (4) according to Claim 5 or 6, **characterized in that** the smoke bar (3) has a point (11) on its end that is located opposite to the connecting device (9), wherein the point (11) is preferably an eccentrically arranged point and wherein in particular the position of the point (11) is adjustable in relation to the central axis (M) of the smoke bar top module (4).

8. Smoke bar top module (4) according to at least one of the Claims 5 to 7, **characterized in that** the connecting device, in particular the recess (9), comprises a smoke bar end stop (10) that is hit by the smoke bar (3) during inserting, wherein preferably the diameter of the recess (9) is larger than the diameter or diameter of the perimeter of the smoke bar and/or wherein the connecting device (9) is formed as a partial shell, in particular half shell.

9. Method for extracting a sausage group that hangs on multiple input hooks (1) of a hanging device (100), in particular of a hanging device according to at least one of the Claims 1-4, with the following steps:
- inserting a smoke bar (3) into sausage loops of a sausage group (13),
- moving the smoke bar (3) in an opposite direction to the movement direction (T) of the
input hooks (1) up to the end of the sausage group, wherein a
smoke bar top module (4) connected to the smoke bar at its leading end, is guided in a guiding device (2a,5,6) of the input hooks (1) and
- extracting the smoke bar (3) loaded with sausages from the hanging device (100).

10. Method according to Claim 9, **characterized in that**
- a smoke bar top module (4) is inserted in guiding devices of the input hooks (1),
- the smoke bar (3) is inserted in the connecting device (9) of the smoke bar top module and the smoke bar (3) pushes the smoke bar top module (4) against the movement direction (T) of the input hooks (1) beyond the end of the sausage group to be input; subsequently
- the smoke bar (3) loaded with sausages is extracted.

11. Method according to Claim 10, **characterized in that**
prior to the extraction of the smoke bar loaded with sausages, the smoke bar (3) is moved away from the smoke bar top module (4) in the movement direction of the input hooks (1) or moved out of an opening in the lateral and/or upper area of the connecting device (9).

12. Method according to Claim 9, 10 or 11 **characterized in that**
after extraction of the smoke bar (3), the smoke bar top module (4) moves in the movement direction of the hanging hooks (1) along with the hanging hooks (1) up to an end stop (7) ahead of a deflection radius (8) where a new smoke bar (3) is pushed into the smoke bar top module (4) that is moved together with the smoke bar (3) against the movement direction (T) of the input hooks (1) in order to take over a subsequent sausage group.

13. Method according to at least one of the Claims 9-11, **characterized in that** the smoke bar top module (4) inserted once remains in the hanging device (1) when multiple sausage groups (13) are extracted successively.

14. Method according to at least one of the Claims 9-13, **characterized in that** sausage groups are extracted on the front and back side of the hanging device (100) and that a respective smoke bar is guided on a smoke bar top module (4a, 4b) or in the guiding of the hanging hook on the front and back side of the hanging device (100).

15. Smoke bar top module according to at least one of the Claims 5-8, **characterized in that** at least the point of the smoke bar top module (4) is formed flexibly, preferably of an elastic material or multiple chain segments (12) that are connected to one another in a way that they can be moved in the axial direction.

## Revendications

1. Dispositif d'accrochage ou de suspension (100) destiné à suspendre des saucisses (20), notamment des chapelets ou chaines de saucisses, comprenant plusieurs crochets de suspension (1) en révolution, et un embout de barre de fumage (4) avec un système de liaison (9), notamment un évidement (9), pour l'emmanchement axial ou l'insertion axiale d'une barre de fumage,
**caractérisé en ce que**
les crochets de suspension (1) présentent un dispositif de guidage (2a, 5, 6) pour guider l'embout de barre de fumage (4) à l'encontre de la direction de mouvement (T) des crochets de suspension (1), l'embout de barre de fumage (4) présentant un dispositif de guidage (2b, 5, 6), qui interagit avec le dispositif de guidage (2a, 5, 6) des crochets de suspension (1).

2. Dispositif de suspension (100) selon la revendication 1, **caractérisé en ce que** les dispositifs de guidage (2a, 5, 6) sont réalisés de manière telle, que la barre de fumage (3) ou l'embout de barre de fumage (4) soit monté de manière axialement mobile dans les dispositifs de guidage (2a), et
les crochets de suspension (1) comportent, en guise de dispositifs de guidage (2a), une rainure (6), dans laquelle circule une protubérance (5) de la barre de fumage ou de l'embout de barre de fumage (4), ou bien les crochets de suspension (1) comportent, en guise de dispositifs de guidage (2a), une protubérance (5), qui circule dans une rainure (6) dans la barre de fumage ou l'embout de barre de fumage (4).

3. Dispositif de suspension (100) selon l'une au moins des revendications 1-2, **caractérisé en ce que** la barre de fumage (3) ou l'embout de barre de fumage (4) est maintenu par le dispositif de guidage (2a, 5, 6), notamment par force magnétique, ou bien par le contour du dispositif de guidage (2a, 5, 6), ou bien encore par une pièce de pression ou un élément de ressort.

4. Dispositif de suspension (100) selon l'une au moins des revendications précédentes, **caractérisé en ce que** le dispositif de suspension (100) comporte au moins une butée (7), qui stoppe l'embout de barre de fumage (4) avant le début d'un rayon de renvoi (8).

5. Embout de barre de fumage (4) comprenant un système de liaison (9), notamment un évidement (9), pour l'emmanchement axial ou l'insertion axiale d'une barre de fumage (3), et comprenant également un dispositif de guidage (2b, 5, 6) pour le guidage de l'embout de barre de fumage (4) à l'encontre de la direction de mouvement de crochets de suspension (1) d'un dispositif de suspension (100), notamment selon l'une au moins des revendications 1-4, le dispositif de guidage (2b, 5, 6) de l'embout de barre de fumage pouvant interagir avec un dispositif de guidage (2a, 5, 6) des crochets de suspension.

6. Embout de barre de fumage (4) selon au moins la revendication 5, **caractérisé en ce que** le dispositif de guidage (2b, 5, 6) comprend, soit une protubérance (5), qui peut circuler dans une rainure (6) des crochets de suspension (1), soit une rainure (6) dans laquelle peut circuler une protubérance (5) des crochets.

7. Embout de barre de fumage (4) selon la revendication 5 ou la revendication 6, **caractérisé en ce que** la barre de fumage (3) présente à son extrémité opposée au dispositif de liaison (9), une pointe (11), la pointe (11) étant de préférence une pointe agencée de manière excentrée, et la position de la pointe (11) par rapport à l'axe central (M) de l'embout de barre de fumage (4), étant notamment réglable.

8. Embout de barre de fumage (4) selon l'une au moins des revendications 5 à 7, **caractérisé en ce que** le dispositif de liaison, notamment l'évidement (9), comporte une butée de barre de fumage (10), contre laquelle vient s'appuyer la barre de fumage (3) lors de l'insertion, le diamètre de l'évidement (9) étant de préférence supérieur au diamètre ou au diamètre de cercle circonscrit de la barre de fumage, et/ou le dispositif de liaison (9) étant réalisé sous forme de coque partielle, notamment de demi-coque.

9. Procédé pour prélever un groupe de saucisses, qui est suspendu à plusieurs crochets de suspension (1) d'un dispositif de suspension (100), notamment d'un dispositif de suspension selon l'une au moins des revendications 1-4, comprenant les étapes suivantes :
- l'insertion d'une barre de fumage (3) dans des boucles de saucisses d'un groupe de saucisses (13),
- le déplacement de la barre de fumage (3) à l'encontre de la direction de mouvement (T) des crochets de suspension (1), jusqu'à la fin du groupe de saucisses, un embout de barre de fumage (4), qui est relié à la barre de fumage à son extrémité avant, étant guidé dans un dispositif de guidage (2a, 5, 6) des crochets de suspension (1), et
- le prélèvement de la barre de fumage (3) chargée en saucisses, du dispositif de suspension (100).

10. Procédé selon la revendication 9, **caractérisé**
- **en ce qu'**un embout de barre de fumage (4) est inséré dans des dispositifs de guidage des crochets de suspension (1),
- **en ce que** l'on introduit la barre de fumage (3) dans le dispositif de liaison (9) de l'embout de barre de fumage, et la barre de fumage (3) fait coulisser l'embout de barre de fumage (4) à l'encontre de la direction de mouvement (T) des crochets de suspension (1), jusqu'au-delà de l'extrémité terminale du groupe de saucisses à prélever, et
- **en ce que** l'on prélève ensuite la barre de fumage (3) chargée de saucisses.

11. Procédé selon la revendication 10, **caractérisé en ce qu'**avant le prélèvement de la barre de fumage chargée de saucisses, la barre de fumage (3) est déplacée dans la direction de mouvement des crochets de suspension (1) en s'éloignant de l'embout de barre de fumage (4), ou bien est déplacée hors d'une ouverture dans la zone latérale et/ou supérieure du dispositif de liaison (9) .

12. Procédé selon la revendication 9, 10 ou la revendication 11, **caractérisé en ce qu'**après le retrait de la barre de fumage (3), l'embout de barre de fumage (4) se déplace dans la direction de mouvement des crochets de suspension (1), avec les crochets de suspension (1), jusqu'à une butée (7) avant un rayon de renvoi (8), où est alors insérée une nouvelle barre de fumage (3) dans l'embout de barre de fumage (4), qui est déplacé en commun avec la barre de fumage (3) à l'encontre de la direction de mouvement (T) des crochets de suspension (1), en vue de prélever un groupe de saucisses suivant.

13. Procédé selon l'une au moins des revendications 9-11, **caractérisé en ce que** l'embout de barre de fumage (4) ayant été introduit une fois, reste dans le dispositif de suspension (1) lorsque plusieurs groupes de saucisses (13) sont prélevés successivement.

14. Procédé selon l'une au moins des revendications 9-13, **caractérisé en ce que** des groupes de saucisses sont prélevés sur le côté avant et le côté arrière du dispositif de suspension (100), et sur le côté avant et le côté arrière du dispositif de suspension (100), une barre de fumage respective est guidée au niveau d'un embout de barre de fumage (4a, 4b) ou dans le guidage du crochet de suspension.

15. Embout de barre de fumage selon l'une au moins des revendications 5-8, **caractérisé en ce qu'**au moins la pointe de l'embout de barre de fumage (4) est réalisée de manière à être flexible, de préférence en un matériau élastique ou en plusieurs segments de chaine (12), qui sont reliés mutuellement de manière mobile, dans la direction axiale.
